(19) Europäisches Patentamt / European Patent Office / Office européen des brevets

(11) **EP 2 883 643 B1**

(12) **EUROPEAN PATENT SPECIFICATION**

(45) Date of publication and mention
of the grant of the patent:
**06.09.2017 Bulletin 2017/36**

(21) Application number: **13828082.1**

(22) Date of filing: **24.05.2013**

(51) Int Cl.:
***B23K 9/18*** *(2006.01)*     ***B23K 33/00*** *(2006.01)*

(86) International application number:
**PCT/JP2013/003307**

(87) International publication number:
**WO 2014/024365 (13.02.2014 Gazette 2014/07)**

(54) **SUBMERGED ARC WELDING METHOD**

UNTERPULVERSCHWEISSVERFAHREN

PROCÉDÉ DE SOUDAGE À L'ARC SUBMERGÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.08.2012 JP 2012176935**

(43) Date of publication of application:
**17.06.2015 Bulletin 2015/25**

(73) Proprietor: **JFE Steel Corporation
Tokyo 100-0011 (JP)**

(72) Inventors:
• **KOZUKI, Shohei
Tokyo 100-0011 (JP)**
• **ISHIGAMI, Atsushi
Tokyo 100-0011 (JP)**
• **HAYAKAWA, Naoya
Tokyo 100-0011 (JP)**

(74) Representative: **Stebbing, Timothy Charles
Haseltine Lake LLP
Lincoln House, 5th Floor
300 High Holborn
London WC1V 7JH (GB)**

(56) References cited:
**WO-A1-2010/137186     JP-A- 2010 221 297**

**Description**

TECHNICAL FIELD

The present invention relates to a submerged arc welding method for a steel plate.

The present invention also relates to a weld joint formed by the submerged arc welding method, and a steel pipe or tube having the weld joint.

BACKGROUND ART

Submerged arc welding is a highly efficient welding technique widely used when welding steel plates, as it allows for supply of a large current to increase the depth of fusion and the wire deposited amount. In particular, when butt welding steel plates by submerged arc welding, multiple electrodes may be used for single pass welding of the bottom side and the top side of the steel plates (so-called double one layer welding). Document WO2010/137186 A1 (PTL10) discloses a submerged arc welding method whereby different welding conditions including the heat input may be varied to improve the toughness of the welded heat affected zone. In double one layer welding, the bottom side weld metal and the top side weld metal sufficiently overlap, making it necessary to ensure the depth of fusion so as to eliminate an unmelted portion. Hence, welding is typically performed by applying a large current of 1000 A or more (for example, see JP H11-138266 A (PTL 1) and JP H10-109171 A (PTL 2)).

In order to control surface defects in the undercut or the like, it is also necessary to form a wide bead. Therefore, welding conditions are also adjusted, such as by increasing the voltage.

Increasing the current and voltage, however, leads to an increase in welding heat input, causing the problem of a deterioration in toughness of the welded heat affected zone. To address this problem, various techniques have been examined for improving the toughness of the welded heat affected zone, such as a technique to improve properties of steel plates (for example, JP 2002-146471 A (PTL 3), JP 2004-52104 A (PTL 4), and JP 2009-91653 A (PTL 5)), a technique to use a thin wire for welding work (for example, JP 2006-272377 A (PTL 6) and JP 2009-241128 A (PTL 7)), and a technique to control the bead shape (for example, JP 2010-274275 A (PTL 8) and JP 2010-274276 A (PTL 9)).

With the techniques disclosed in PTL 3 through PTL 9, however, it is difficult to stably increase the toughness of the welded heat affected zone.

In other words, since the welded heat affected zone (in particular the course region), occurring when welding the bottom side of the steel plates, is reheated by welding of the top side, a toughness deterioration region referred to as a local brittle zone develops, and since the dimensions and shape of the brittle zone vary depending on the shape of the welded heat affected zone, variation in toughness occurs.

CITATION LIST

Patent Literature

PTL 1: JP H11-138266 A
PTL 2: JP H10-109171 A
PTL 3: JP 2002-146471 A
PTL 4: JP 2004-52104 A
PTL 5: JP 2009-91653 A
PTL 6: JP 2006-272377 A
PTL 7: JP 2009-241128 A
PTL 8: JP 2010-274275 A
PTL 9: JP 2010-274276 A
PTL 10: WO2010/137186 A1

SUMMARY OF INVENTION

(Technical Problem)

The present invention has been developed to resolve the above problem and provides a submerged arc welding method that, when butt welding steel plates by submerged arc welding, can stably obtain a high-toughness welded heat affected zone. The present invention also provides a method for manufacturing a weld joint formed by the submerged arc welding method, and a method for manufacturing a steel pipe or tube having said weld joint.

(Solution to Problem)

The inventor examined the toughness of the welded heat affected welding conditions, to weld the bottom side of steel plates and then weld the top side.

As a result, the inventor discovered that a welded heat affected zone with excellent toughness can be obtained stably by controlling the welding heat input to be a certain amount or less and controlling the inclination angles of the borderline between the weld metal that is formed by solidifying after melting and the welded heat affected zone that is formed in the unmelted steel plates (referred to below as the melting borderline) appropriately at the bottom side and at the top side.

The present invention is based on this discovery.

A submerged arc welding method according to the present invention is for butt welding a steel plate having a wall thickness within a range of 20mm to 40 mm with submerged arc welding by welding a top side of the steel plate after welding a bottom side thereof, wherein

$\theta 1 \geq 15$ (Expression (1)), where $\theta 1$ (°) is an angle between a top side borderline and a line perpendicular to a first parallel line, the top side borderline connecting a junction and a first intersection point, the junction being an intersection between a melting borderline of bottom side weld metal and a melting borderline of top side weld metal, the first intersection point being an intersection between the first parallel line and the melting borderline of the top side weld metal, the first parallel line traversing a position 5 mm from the junction in a direction of an upper surface of the steel plate and being parallel to the upper surface,

$\theta 2 \geq 15$ (Expression (2)), where $\theta 2$ (°) is an angle between a bottom side borderline and a line perpendicular to a second parallel line, the bottom side borderline connecting the junction and a second intersection point, the second intersection point being an intersection between the second parallel line and the melting borderline of the bottom side weld metal, the second parallel line traversing a position 5 mm from the junction in a direction of a lower surface of the steel plate and being parallel to the lower surface, and

$Q \leq 1.3 \times t^{1.37}$ (Expression (3)), where Q (kJ/cm) is a total heat input of a bottom side welding heat input and a top side welding heat input of the steel plate, t (mm) is a wall thickness of the steel plate, and t (mm) is within a range of 20 mm to 40 mm.

In the submerged arc welding method according to the present invention, it is preferably the case that $\theta 1 + \theta 2 \geq 50$ (Expression (4)).

Furthermore, the top side welding heat input of the steel plate is preferably larger than the bottom side welding heat input of the steel plate, and welding of the bottom side and welding of the top side of the steel plate are preferably each performed with 3 electrodes or more and a single pass.

A weld joint according to the present invention is formed by the above submerged arc welding method, and a steel pipe or tube according to the present invention includes this weld joint.

In the present invention, between the two sides of a steel plate being welded, the first side to be welded is considered to be the bottom side, and the subsequently welded side is considered to be the top side.

(Advantageous Effect of Invention)

According to the present invention, a welded heat affected zone with excellent toughness can be stably obtained by submerged arc welding of steel plates, thus yielding an excellent effect in industrial terms.

BRIEF DESCRIPTION OF DRAWINGS

The present invention will be further described below with reference to the accompanying drawings, wherein:

FIG. 1 is a cross-sectional diagram schematically illustrating an example of a weld joint formed according to the present invention;

FIG. 2 is a cross-sectional diagram schematically illustrating an example of the shape of a groove in a steel plate; and

FIG. 3 is a cross-sectional diagram schematically illustrating the position where Charpy impact test specimens are sampled.

DESCRIPTION OF EMBODIMENTS

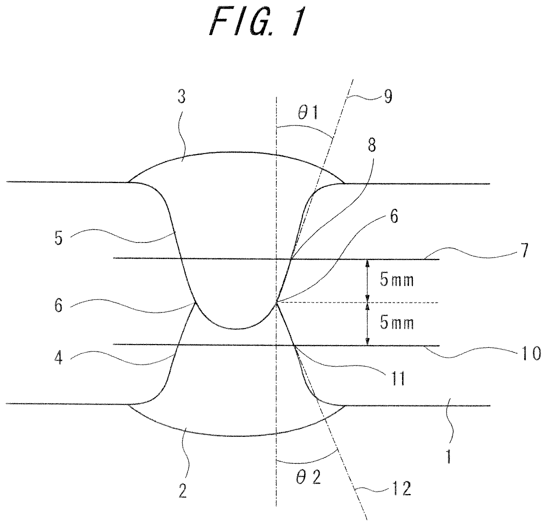

FIG. 1 is a cross-sectional diagram schematically illustrating an example of a weld joint formed according to the present invention. The following describes the present invention with reference to FIG. 1.

First, the bottom side of a steel plate 1 is welded by submerged arc welding, yielding a weld metal 2 (referred to below as a bottom side weld metal). Next, the top side of the steel plate 1 is welded by submerged arc welding, yielding a weld metal 3 (referred to below as a top side weld metal).

A line 7 that traverses a position 5 mm in the direction of the upper surface of the steel plate 1 from a point 6 where a melting borderline 4 of the bottom side and a melting borderline 5 of the top side intersect (referred to below as a junction) and is parallel to the upper surface is referred to as a first parallel line. A point 8 where the first parallel line 7 and the melting borderline 5 of the top side intersect is referred to as a first intersection point. A line 9 connecting the junction 6 and the first intersection point 8 is referred to as a top side borderline, and the angle between the top side borderline 9 and a line perpendicular to the first parallel line 7 is θ1 (°).

Note that the junction is formed in two locations, yet the point closer to the center of wall thickness is preferably used as the junction serving as the reference.

A line 10 that traverses a position 5 mm in the direction of the lower surface of the steel plate 1 from the junction 6 and is parallel to the lower surface is referred to as a second parallel line. A point 11 where the second parallel line 10 and the melting borderline 4 of the bottom side intersect is referred to as a second intersection point. A line 12 connecting the junction 6 and the second intersection point 11 is referred to as a bottom side borderline, and the angle between the bottom side borderline 12 and a line perpendicular to the second parallel line 10 is θ2 (°).

Setting the angle θ1 to be 15° or more improves the toughness of the welded heat affected zone. The reason is considered to be that as the top side borderline 9 approaches being horizontal, the propagation path for cracks becomes complicated, and the propagation energy necessary for cracks to grow increases.

Accordingly, θ1 is set to be 15° or greater, as indicated in Expression (1) below. A considerable welding heat input is necessary, however, to form a weld such that θ1 exceeds 50°. Therefore, θ1 is preferably in a range of 15° to 50°, and more preferably in a range of 30° to 50°.

$$\theta 1 \geq 15 \qquad \text{Expression (1)}$$

Setting the angle θ2 to be 15° or more also improves the toughness of the welded heat affected zone. In the same way as described above, the reason is that as the bottom side borderline 12 approaches being horizontal, the propagation path for cracks becomes complicated, and the propagation energy necessary for cracks to grow increases.

Accordingly, θ2 is also set to be 15° or greater, as indicated in Expression (2) below. A considerable welding heat input is necessary, however, to form a weld such that θ2 exceeds 50°. Therefore, θ2 is preferably in a range of 15° to 50°, and more preferably in a range of 30° to 50°.

$$\theta 2 \geq 15 \qquad \text{Expression (2)}$$

Note that the distance between the junction 6 and each of the first and second parallel lines 7 and 10 is set to be 5 mm in accordance with the position where Charpy impact test specimens for assessing toughness are sampled.

The sum of θ1 and θ2 is preferably 50° or greater, as indicated by Expression (4) below. Setting θ1 + θ2 to be 50° or greater allows for reduction in the area of the region in which the welded heat affected zone generated by welding of the bottom side is reheated during welding of the top side causing the toughness thereof to deteriorate. As a result, toughness improves.

$$\theta 1 + \theta 2 \geq 50 \qquad \text{Expression (4)}$$

During welding of a steel plate with a thickness of 25.4 mm or more, the shape of the weld metal is extended more in the direction of wall thickness, making it easy for the angles θ1 and θ2 to become 15° or less. Accordingly, an improvement in toughness can be particularly expected in such a steel plate.

The wall thickness of a steel plate is 20 mm to 40 mm.

The welding heat input when welding the bottom side and the top side of the steel plate 1 needs to be set in accordance with the wall thickness of the steel plate 1. The reason is that for a steel plate with a large wall thickness, in particular a steel plate with a thickness of 25.4 mm or more, heat input increases, making it easy for toughness of the welded heat affected zone to deteriorate. Accordingly, welding is performed with the total heat input Q (kJ/cm) of the bottom side welding heat input and the top side welding heat input of the steel plate within a range satisfying Expression (3) below with respect to the wall thickness t of the steel plate 1, and t (mm) being within a range of 20 mm to 40 mm.

$$Q \leq 1.3 \times t^{1.37} \qquad \text{Expression (3)}$$

During submerged arc welding of a steel plate, however, it becomes difficult to ensure a sufficient depth of fusion and deposited amount if Q is less than $t^{1.37}$ kJ/cm. Therefore, during submerged arc welding of such a steel plate, in particular a steel plate with a thickness of 25.4 mm to 38.1 mm, Q is in a range of $t^{1.37}$ kJ/cm to $1.3 \times t^{1.37}$ kJ/cm.

The bottom side and top side welding heat inputs need not be identical, and the top side welding heat input is preferably larger than the bottom side welding heat input. The reason is that by keeping the welding heat input low during welding of the bottom side, coarsening of the welded heat affected zone near the melting borderline 4 of the bottom side can be prevented. As a result, deterioration of toughness due to reheating upon welding of the top side can be prevented.

As described above, the effect of the present invention of stably obtaining excellent toughness in the welded heat affected zone for submerged arc welding of the steel plate is achieved regardless of the shape of the groove, welding current, welding voltage, welding speed, number of electrodes, and arrangement of electrodes. In particular, the present invention is preferably adopted for double one layer welding such that welding of the bottom side and welding of the top side of the steel plate are each performed with 3 electrodes or more and a single pass.

In the case of welding with 3 electrodes or more, when welding the bottom side of the steel plate, at the front electrode in the direction in which welding progresses (referred to below as the first electrode) wire with a diameter of 3.2 mm or more is preferably used, and the welding voltage is preferably 33 V or more. Conversely, when welding the top side of the steel plate, at the first electrode wire with a diameter of 3.2 mm or less is preferably used, and the welding voltage is preferably 33 V or less. Welding by setting the first electrode in this way makes it easier to adjust the inclination angles of the melting borderline 4 of the bottom side and the melting borderline 5 of the top side. As a result, it becomes easy to control the angles θ1 and θ2 to be within the above ranges.

Note that for the wire, a solid wire widely used for general submerged arc welding may be used in the present invention, and a cored wire with packing material, such as metal powder or the like, embedded therein may also be used.

The submerged arc welding method according to the present invention may also be suitably used for pipe or tube formation welding (double-sided welding of the inside and outside surfaces) of a large-diameter pipe or tube, such as a UOE steel pipe or tube, a spiral steel pipe or tube, or a rolled plate steel pipe or tube.

Note that a UOE steel pipe or tube is a steel pipe or tube in which the edges of steel plates pressed in a U shape are abutted to form an O shape, and after welding the inside and outside surfaces, the steel pipe or tube is extended to a desired caliber.

Since welding to form such steel pipes or tubes is generally performed in the order of the inside and the outside, the inside and outside respectively correspond to the bottom side and top side in the present invention.

EXAMPLES

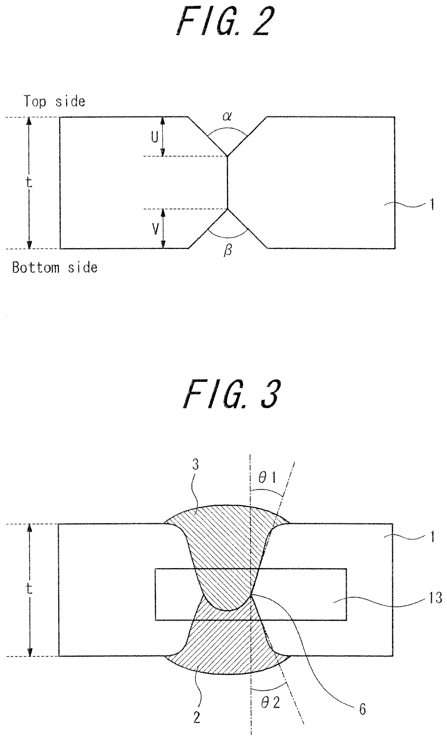

After forming grooves in the shape illustrated in FIG. 2 in two types of steel plates (wall thickness t: 25.4 mm, 38.1 mm) having the composition listed in Table 1, submerged arc welding (single pass) of the bottom side was performed, and then submerged arc welding (single pass) of the top side was performed.
[Table 1]

Table 1

| Wall thickness (mm) | Chemical composition (mass%) | | | | | | | | | |
|---|---|---|---|---|---|---|---|---|---|---|
| | C | Si | Mn | P | S | Cu | Ni | Cr | Mo | Nb |
| 25.4 | 0.05 | 0.15 | 1.6 | 0.01 | 0.002 | 0.02 | 0.01 | 0 | 0.15 | 0.03 |
| 38.1 | 0.05 | 0.15 | 1.5 | 0.01 | 0.002 | 0.26 | 0.16 | 0 | 0.10 | 0.04 |

Table 2 lists the shape of the grooves in the steel plate 1. In Table 2, the groove angle at the bottom side is angle β (°) in FIG. 2, and the groove angle at the top side is angle a (°) in FIG. 2. Furthermore, in Table 2, the groove depth at the bottom side is V (mm) in FIG. 2, and the groove depth at the top side is U (mm) in FIG. 2.
[Table 2]

Table 2

| Weld number | Wall thickness (mm) | Bottom side / top side | Groove angle (°) | Groove depth (mm) |
|---|---|---|---|---|
| 1 | 25.4 | bottom side | 90 | 7.5 |
| | | top side | 70 | 10.0 |
| 2 | 38.1 | bottom side | 60 | 13.5 |
| | | top side | 60 | 15.5 |
| 3 | 25.4 | bottom side | 70 | 10.0 |
| | | top side | 70 | 9.0 |
| 4 | 38.1 | bottom side | 70 | 14.0 |
| | | top side | 60 | 14.0 |
| 5 | 25.4 | bottom side | 70 | 8.5 |
| | | top side | 70 | 10.0 |
| 6 | 38.1 | bottom side | 65 | 14.0 |
| | | top side | 65 | 14.5 |
| 7 | 25.4 | bottom side | 90 | 7.5 |
| | | top side | 70 | 10.0 |
| 8 | 25.4 | bottom side | 70 | 9.5 |
| | | top side | 70 | 9.5 |
| 9 | 38.1 | bottom side | 65 | 14.0 |
| | | top side | 65 | 14.5 |
| 10 | 38.1 | bottom side | 70 | 13.5 |
| | | top side | 60 | 15.0 |
| 11 | 25.4 | bottom side | 70 | 8.5 |
| | | top side | 70 | 10.0 |
| 12 | 38.1 | bottom side | 65 | 14.0 |
| | | top side | 65 | 14.5 |

The welding conditions for submerged arc welding are listed in Tables 3 and 4. As indicated in Table 3, welding was performed with 3 electrodes (single pass) only for the bottom side in weld number 1, whereas welding was performed with four electrodes (single pass) in all other cases. For each current listed in Table 3, direct current was used for the first electrode and alternating current for the second and subsequent electrodes.

The distance between electrodes in Table 4 is the interval (mm) between wire tips on the surface of the steel plate 1 (bottom side or top side). The distance between the base material and the electrode is the interval (mm) between the surface of the steel plate 1 (bottom side or top side) and the bottom side of the contact tip. The electrode angle is the angle between the wire and a line perpendicular to the steel plate. An angle of advance (°) is listed as positive, and an angle of sweepback (°) as negative.

In this context, an angle of advance is the angle between the wire and a line perpendicular to the steel plate when the wire is inclined so that the wire tip is located further forward than the torch in the direction in which welding progresses, and an angle of sweepback is the angle between the wire and a line perpendicular to the steel plate when the wire is inclined so that the wire tip is located further back than the torch in the direction in which welding progresses.
[Table 3]

Table 3

| Weld number | Bottom side/top side | #1 | | | #2 | | | #3 | | | #4 | | | Welding speed (cm/min) | Welding heat input (kJ/cm) |
|---|---|---|---|---|---|---|---|---|---|---|---|---|---|---|---|
| | | Current (A) | Voltage (V) | Wire diameter (mm) | Current (A) | Voltage (V) | Wire diameter (mm) | Current (A) | Voltage (V) | Wire diameter (mm) | Current (A) | Voltage (V) | Wire diameter (mm) | | |
| 1 | bottom side | 1250 | 35 | 4.0 | 1000 | 40 | 4.0 | 880 | 44 | 4.0 | - | - | - | 147 | 50.0 |
| | top side | 1350 | 30 | 4.0 | 1100 | 35 | 4.0 | 950 | 42 | 4.0 | 800 | 42 | 4.0 | 165 | 55.5 |
| 2 | bottom side | 1400 | 33 | 3.2 | 1120 | 38 | 4.0 | 950 | 42 | 4.0 | 770 | 45 | 4.0 | 115 | 85.2 |
| | top side | 1350 | 30 | 3.2 | 1080 | 40 | 4.0 | 900 | 45 | 4.0 | 730 | 45 | 4.0 | 95 | 99.2 |
| 3 | bottom side | 1350 | 35 | 4.0 | 1100 | 38 | 4.0 | 960 | 43 | 4.0 | 820 | 43 | 4.0 | 170 | 58.4 |
| | top side | 1350 | 30 | 4.0 | 1100 | 36 | 4.0 | 950 | 42 | 4.0 | 780 | 44 | 4.0 | 195 | 47.5 |
| 4 | bottom side | 1380 | 34 | 4.0 | 1100 | 40 | 4.0 | 950 | 44 | 4.0 | 800 | 44 | 4.0 | 105 | 96.0 |
| | top side | 1200 | 33 | 2.4* | 960 | 40 | 4.0 | 840 | 42 | 4.0 | 720 | 45 | 4.0 | 105 | 83.2 |
| 5 | bottom side | 1300 | 35 | 4.0 | 1080 | 37 | 4.0 | 900 | 42 | 4.0 | 720 | 42 | 4.0 | 180 | 51.2 |
| | topside | 1340 | 30 | 3.2 | 1070 | 38 | 4.0 | 870 | 43 | 4.0 | 670 | 45 | 4.0 | 165 | 54.0 |
| 6 | bottom side | 1250 | 36 | 4.0 | 1000 | 40 | 4.0 | 880 | 42 | 4.0 | 760 | 48 | 4.0 | 110 | 86.4 |
| | top side | 1280 | 32 | 2.4 | 1020 | 40 | 4.0 | 900 | 43 | 4.0 | 770 | 43 | 4.0 | 100 | 92.1 |
| 7 | bottom side | 1250 | 30 | 4.0 | 940 | 40 | 4.0 | 820 | 44 | 4.0 | 700 | 45 | 4.0 | 170 | 50.4 |
| | top side | 1400 | 35 | 4.0 | 1120 | 38 | 4.0 | 950 | 42 | 4.0 | 780 | 42 | 4.0 | 180 | 54.7 |
| 8 | bottom side | 1320 | 30 | 4.0 | 1080 | 40 | 4.0 | 920 | 43 | 4.0 | 730 | 43 | 4.0 | 180 | 51.3 |
| | top side | 1280 | 35 | 4.0 | 1050 | 42 | 4.0 | 930 | 45 | 4.0 | 770 | 45 | 4.0 | 185 | 53.6 |

EP 2 883 643 B1

| Weld number | Bottom side / top side | #1 | | | #2 | | | #3 | | | #4 | | | Welding speed (cm/min) | Welding heat input (kJ/cm) |
|---|---|---|---|---|---|---|---|---|---|---|---|---|---|---|---|
| | | Current (A) | Voltage (V) | Wire diameter (mm) | Current (A) | Voltage (V) | Wire diameter (mm) | Current (A) | Voltage (V) | Wire diameter (mm) | Current (A) | Voltage (V) | Wire diameter (mm) | | |
| 9 | bottom side | 1300 | 32 | 4.0 | 1060 | 39 | 4.0 | 880 | 41 | 4.0 | 690 | 44 | 4.0 | 105 | 85.4 |
| | top side | 1280 | 35 | 4.0 | 1020 | 40 | 4.0 | 900 | 42 | 4.0 | 750 | 42 | 4.0 | 94 | 98.9 |
| 10 | bottom side | 1350 | 30 | 4.0 | 1120 | 40 | 4.0 | 980 | 43 | 4.0 | 800 | 43 | 4.0 | 113 | 85.9 |
| | top side | 1380 | 35 | 4.0 | 1120 | 38 | 4.0 | 960 | 40 | 4.0 | 820 | 45 | 4.0 | 103 | 96.8 |
| 11 | bottom side | 1300 | 35 | 4.0 | 1080 | 37 | 4.0 | 900 | 42 | 4.0 | 720 | 42 | 4.0 | 170 | 54.2 |
| | top side | 1340 | 30 | 3.2 | 1070 | 38 | 4.0 | 870 | 43 | 4.0 | 670 | 45 | 4.0 | 160 | 55.7 |
| 12 | bottom side | 1250 | 36 | 4.0 | 1000 | 40 | 4.0 | 880 | 42 | 4.0 | 760 | 48 | 4.0 | 100 | 95.1 |
| | top side | 1280 | 32 | 2.4 | 1020 | 40 | 4.0 | 900 | 43 | 4.0 | 770 | 43 | 4.0 | 95 | 97.0 |

* Cored wire was used
#1 to #4: First electrode to fourth electrode

EP 2 883 643 B1

[Table 4]

Table 4

| Weld number | Bottom side / top side | Distance between electrodes (mm) | | | Distance between base material and electrode (mm) | | | | Electrode angle (°) | | | |
|---|---|---|---|---|---|---|---|---|---|---|---|---|
| | | #1-2 | #2-3 | #3-4 | #1 | #2 | #3 | #4 | #1 | #2 | #3 | #4 |
| 1 | bottom side | 18 | 15 | - | 27 | 28 | 28 | - | 0 | 15 | 40 | - |
| | top side | 19 | 15 | 15 | 27 | 30 | 30 | 30 | 0 | 15 | 25 | 40 |
| 2 | bottom side | 22 | 18 | 16 | 25 | 30 | 30 | 30 | 0 | 13 | 25 | 40 |
| | top side | 22 | 18 | 16 | 25 | 30 | 30 | 30 | -7 | 5 | 15 | 45 |
| 3 | bottom side | 20 | 17 | 15 | 30 | 30 | 30 | 30 | 0 | 13 | 25 | 40 |
| | top side | 18 | 15 | 15 | 30 | 32 | 32 | 32 | -5 | 5 | 15 | 45 |
| 4 | bottom side | 18 | 16 | 16 | 30 | 30 | 30 | 30 | 0 | 13 | 25 | 36 |
| | top side | 16 | 12 | 12 | 23 | 30 | 30 | 30 | 0 | 13 | 25 | 40 |
| 5 | bottom side | 20 | 17 | 17 | 30 | 30 | 30 | 30 | 0 | 12 | 24 | 36 |
| | top side | 15 | 12 | 12 | 30 | 30 | 30 | 30 | 0 | 12 | 24 | 36 |
| 6 | bottom side | 19 | 17 | 17 | 28 | 32 | 32 | 32 | -5 | 5 | 15 | 45 |
| | top side | 15 | 13 | 13 | 25 | 30 | 30 | 30 | -5 | 5 | 15 | 45 |
| 7 | bottom side | 20 | 17 | 15 | 30 | 30 | 30 | 30 | -5 | 5 | 15 | 40 |
| | top side | 18 | 15 | 15 | 30 | 30 | 30 | 30 | 0 | 12 | 24 | 36 |
| 8 | bottom side | 20 | 17 | 17 | 30 | 30 | 30 | 30 | 0 | 12 | 24 | 36 |
| | top side | 15 | 12 | 12 | 30 | 30 | 30 | 30 | 0 | 12 | 24 | 36 |
| 9 | bottom side | 19 | 17 | 17 | 28 | 32 | 32 | 32 | -5 | 5 | 15 | 45 |
| | top side | 15 | 13 | 13 | 25 | 30 | 30 | 30 | -5 | 5 | 15 | 45 |
| 10 | bottom side | 18 | 16 | 16 | 30 | 30 | 30 | 30 | 0 | 13 | 25 | 36 |
| | top side | 16 | 12 | 12 | 23 | 30 | 30 | 30 | 0 | 13 | 25 | 40 |
| 11 | bottom side | 20 | 17 | 17 | 30 | 30 | 30 | 30 | 0 | 12 | 24 | 36 |
| | top side | 15 | 12 | 12 | 30 | 30 | 30 | 30 | 0 | 12 | 24 | 36 |
| 12 | bottom side | 19 | 17 | 17 | 28 | 32 | 32 | 32 | -5 | 5 | 15 | 45 |
| | top side | 15 | 13 | 13 | 25 | 30 | 30 | 30 | -5 | 5 | 15 | 45 |
| A positive electrode angle is an angle of advance, and a negative electrode angle is an angle of sweepback. | | | | | | | | | | | | |

Welding was performed under these conditions (weld numbers 1 to 12), and 5 weld joints were produced for each weld number. Next, Charpy impact test specimens and cross-sectional macro specimens were sampled from the specimen sampling position 13 illustrated in FIG. 3.

For the Charpy impact test specimens, 20 specimens from each weld joint were taken as No. 4 specimens stipulated in JIS Z 3111 (i.e. 100 specimens per weld number). The Charpy impact test specimens were sampled so that the notch was parallel to the direction of wall thickness of the steel plate and so that the face including the junction 6 (the face parallel to the surface of the steel plate 1) was in the center in the direction of wall thickness of the sample. The position of the notch was set so that the ratio of the weld metal and the welded heat affected zone at the notch bottom was 50 %.

The Charpy impact test was performed in accordance with JIS Z 2242 (test temperature: -30 °C), and the absorbed energy $_vE_{-30}$ (J) was measured.

Table 5 lists the results. The absorbed energy $_vE_{-30}$ in Table 5 is the lowest value among the measured values obtained during the Charpy impact test on the 100 Charpy impact test specimens for each weld number.

Note that when this value is 56 J or more, it can be considered that excellent toughness is stably obtained in the welded heat affected zone.

For the cross-sectional macro specimens, 3 specimens from each weld joint were taken (i.e. 15 specimens per weld number). Table 5 lists the results of measuring the angles $\theta1$ (°) and $\theta2$ (°) for each cross-sectional macro specimen. The angles $\theta1$ and $\theta2$ in Table 5 are the average value of the 15 specimens measured for each weld number.

[Table 5]

Table 5

| Weld number | $\theta1$ (°) | $\theta2$ (°) | $\theta1 + \theta2$ (°) | Q (kJ/cm) | $_vE_{-30}$ (J) | Notes |
|---|---|---|---|---|---|---|
| 1 | 18 | 21 | 39 | 105.5 | 82 | Inventive examples |
| 2 | 24 | 17 | 41 | 184.4 | 67 | |
| 3 | 27 | 25 | 52 | 105.9 | 121 | |
| 4 | 28 | 24 | 52 | 179.2 | 110 | |
| 5 | 25 | 27 | 52 | 105.2 | 162 | |
| 6 | 32 | 26 | 58 | 178.5 | 154 | |
| 7 | 12 | 38 | 50 | 105.1 | 36 | Comparative examples |
| 8 | 14 | 39 | 53 | 104.9 | 27 | |
| 9 | 26 | 11 | 37 | 184.3 | 29 | |
| 10 | 24 | 14 | 38 | 182.7 | 24 | |
| 11 | 26 | 25 | 51 | 109.9 | 35 | |
| 12 | 33 | 29 | 62 | 192.1 | 30 | |

Weld numbers 1 to 6 listed in Table 5 are Inventive Examples. Among these, weld numbers 1 and 2 are examples for which $\theta1$ satisfies Expression (1), $\theta2$ satisfies Expression (2), and the total heat input Q of the bottom side welding heat input and the top side welding heat input satisfies Expression (3). Excellent toughness was stably obtained for weld numbers 1 and 2.

Weld numbers 3 and 4 are examples for which $\theta1$ satisfies Expression (1), $\theta2$ satisfies Expression (2), the total heat input Q of the bottom side welding heat input and the top side welding heat input satisfies Expression (3), and $\theta1 + \theta2$ satisfies Expression (4). Better toughness than in weld numbers 1 and 2 was stably obtained for weld numbers 3 and 4.

Furthermore, weld numbers 5 and 6 are examples for which $\theta1$ satisfies Expression (1), $\theta2$ satisfies Expression (2), the total heat input Q of the bottom side welding heat input and the top side welding heat input satisfies Expression (3), $\theta1 + \theta2$ satisfies Expression (4), and the top side welding heat input is larger than the bottom side welding heat input. Even better toughness than in weld numbers 3 and 4 was stably obtained for weld numbers 5 and 6.

Conversely, weld numbers 7 and 8 are Comparative Examples for which $\theta1$ is less than 15°, and hence excellent toughness was not stably obtained in the welded heat affected zone.

In weld numbers 9 and 10, $\theta2$ is less than 15°, and hence excellent toughness was not stably obtained in the welded heat affected zone.

Furthermore, in weld numbers 11 and 12, the total heat input Q is too large, and hence excellent toughness was not stably obtained in the welded heat affected zone.

REFERENCE SIGNS LIST

1: Steel plate
2: Bottom side weld metal
3: Top side weld metal
4: Melting borderline of bottom side
5: Melting borderline of top side
6: Junction
7: First parallel line

8: First intersection point
9: Top side borderline
10: Second parallel line
11: Second intersection point
12: Bottom side borderline
13: Specimen sampling position

## Claims

1. A submerged arc welding method for butt welding a steel plate said steel plate having a thickness t(mm) within a range of 20 mm to 40 mm, with submerged arc welding by welding a top side of the steel plate after welding a bottom side thereof, wherein

$\theta 1 \geq 15$ (Expression (1)), where $\theta 1$ (°) is an angle between a top side borderline and a line perpendicular to a first parallel line, the top side borderline connecting a junction and a first intersection point, the junction being an intersection between a melting borderline of bottom side weld metal and a melting borderline of top side weld metal, the first intersection point being an intersection between the first parallel line and the melting borderline of the top side weld metal, the first parallel line traversing a position 5 mm from the junction in a direction of an upper surface of the steel plate and being parallel to the upper surface,

$\theta 2 \geq 15$ (Expression (2)), where $\theta 2$ (°) is an angle between a bottom side borderline and a line perpendicular to a second parallel line, the bottom side borderline connecting the junction and a second intersection point, the second intersection point being an intersection between the second parallel line and the melting borderline of the bottom side weld metal, the second parallel line traversing a position 5 mm from the junction in a direction of a lower surface of the steel plate and being parallel to the lower surface, and

$Q \leq 1.3 \times t^{1.37}$ (Expression (3)), where Q (kJ/cm) is a total heat input of a bottom side welding heat input and a top side welding heat input of the steel plate, t (mm) is a wall thickness of the steel plate, and t (mm) is within a range of 20 mm to 40 mm.

2. The submerged arc welding method according to claim 1, wherein

$$\theta 1 + \theta 2 \geq 50 \ (\text{Expression (4)}).$$

3. The submerged arc welding method according to claim 1 or 2, wherein the top side welding heat input of the steel plate is larger than the bottom side welding heat input of the steel plate.

4. The submerged arc welding method according to any one of claims 1 to 3, wherein welding of the bottom side and welding of the top side of the steel plate are each performed with 3 electrodes or more and a single pass.

5. The submerged arc welding method according to any one of the claims 1 to 4, wherein t (mm) is within a range of 25.4 mm to 38.1 mm and $t^{1.37} \leq Q$.

6. A method for manufacturing a weld joint, wherein the weld joint is formed by the submerged arc welding method according to any one of claims 1 to 5.

7. A method for manufacturing a steel pipe or tube having a weld joint, wherein the weld joint is manufactured by the method according to claim 6.

## Patentansprüche

1. Unterpulverschweißverfahren zum Stumpfschweißen einer Stahlplatte, wobei die Stahlplatte eine Dicke t (mm) innerhalb eines Bereichs von 20 mm bis 40 mm aufweist, mit Unterpulverschweißen durch Schweißen einer oberen Seite der Stahlplatte, nachdem eine untere Seite davon geschweißt wurde, wobei

$\theta 1 \geq 15$ (Ausdruck (1)), wobei $\theta 1$ (°) ein Winkel zwischen einer oberseitigen Grenzlinie und einer Linie senkrecht zu einer ersten parallelen Linie ist, wobei die oberseitige Grenzlinie eine Verbindungsstelle mit einem ersten Schnittpunkt verbindet, wobei die Verbindungsstelle eine Schnittstelle zwischen einer Schmelzgrenzlinie eines unterseitigen Schweißmetalls und einer Schmelzgrenzlinie eines oberseitigen Schweißmetalls ist, wobei der erste Schnittpunkt eine Schnittstelle zwischen der ersten parallelen Linie und der Schmelzgrenzlinie des oberseitigen Schweißmetalls ist, wobei die erste parallele Linie eine Position 5 mm von der Verbindungsstelle in eine Richtung einer oberen Fläche der Stahlplatte durchläuft und parallel zu der oberen Fläche ist,

$\theta 2 \geq 15$ (Ausdruck (2)), wobei $\theta 2$ (°) ein Winkel zwischen einer unterseitigen Grenzlinie und einer Linie senkrecht zu einer zweiten parallelen Linie ist, wobei die unterseitige Grenzlinie die Verbindungsstelle mit einem zweiten Schnittpunkt verbindet, wobei der zweite Schnittpunkt eine Schnittstelle zwischen der zweiten parallelen Linie und der Schmelzgrenzlinie des unterseitigen Schweißmetalls ist, wobei die zweite parallele Linie eine Position 5 mm von der Verbindungsstelle in eine Richtung einer unteren Fläche der Stahlplatte durchläuft und parallel zu der unteren Fläche ist, und

$Q \leq 1{,}3 \times t^{1{,}37}$ (Ausdruck (3)), wobei Q (kJ/cm) eine Gesamtwärmezufuhr einer unterseitigen Schweißwärmezufuhr und einer oberseitigen Schweißwärmezufuhr der Stahlplatte ist, wobei t (mm) eine Wanddicke der Stahlplatte ist und t (mm) innerhalb eines Bereichs von 20 mm bis 40 mm liegt.

2. Unterpulverschweißverfahren nach Anspruch 1, wobei $\theta 1 + \theta 2 \geq 50$ (Ausdruck (4)).

3. Unterpulverschweißverfahren nach Anspruch 1 oder 2, wobei die oberseitige Schweißwärmezufuhr der Stahlplatte größer als die unterseitige Schweißwärmezufuhr der Stahlplatte ist.

4. Unterpulverschweißverfahren nach einem der Ansprüche 1 bis 3, wobei ein Schweißen der unteren Seite und ein Schweißen der oberen Seite der Stahlplatte jeweils mit 3 Elektroden oder mehr und einem einzigen Durchgang durchgeführt werden.

5. Unterpulverschweißverfahren nach einem der Ansprüche 1 bis 4, wobei t (mm) innerhalb eines Bereichs von 25,4 mm bis 38,1 mm liegt und $t^{1{,}3} \leq Q$.

6. Verfahren zum Herstellen einer Schweißnaht, wobei die Schweißnaht durch das Unterpulverschweißverfahren nach einem der Ansprüche 1 bis 5 gebildet wird.

7. Verfahren zum Herstellen einer Stahlleitung oder eines -rohrs, wobei die Schweißnaht durch das Verfahren nach Anspruch 6 hergestellt wird.

**Revendications**

1. Procédé de soudage à l'arc submergé pour souder bout à bout une plaque d'acier, ladite plaque d'acier ayant une épaisseur t (mm) dans une plage de 20 mm à 40 mm, avec le soudage à l'arc submergé en soudant un côté supérieur de la plaque d'acier après avoir soudé son côté inférieur, dans lequel :

$\theta 1 \geq 15$ (expression (1)), où $\theta 1$ (°) est un angle entre une limite latérale supérieure et une ligne perpendiculaire à une première ligne parallèle, la limite latérale supérieure raccordant une jonction et un premier point d'intersection, la jonction étant une intersection entre une limite de fusion du métal de soudure du côté inférieur et une limite de fusion du métal de soudure du côté supérieur, le premier point d'intersection étant une intersection entre la première ligne parallèle et la limite de fusion du métal de soudure du côté supérieur, la première ligne parallèle traversant une position à 5 mm de la jonction dans une direction d'une surface supérieure de la plaque d'acier et étant parallèle à la surface supérieure,
$\theta 2 \geq 15$ (expression (2)), où $\theta 2$ (°) est un angle entre une limite latérale inférieure et une ligne perpendiculaire à une seconde ligne parallèle, la limite latérale inférieure raccordant la jonction et un second point d'intersection, le second point d'insertion étant une intersection entre la seconde ligne parallèle et la limite de fusion du métal de soudure du côté supérieur, la seconde ligne parallèle traversant une position à 5 mm de la jonction dans une direction d'une surface inférieure de la plaque d'acier et étant parallèle à la surface inférieure, et
$Q \leq 1{,}3 \times t^{1{,}37}$ (expression (3)), où Q(kJ/cm) est un apport de chaleur total d'un apport de chaleur de soudage du côté inférieur et d'un apport de chaleur de soudage du côté supérieur de la plaque d'acier, t (mm) est dans une plage de 20 mm à 40 mm.

2. Procédé de soudage à l'arc submergé selon la revendication 1, dans lequel :

$$\theta1 + \theta2 \geq 50 \ (\text{expression } (4)).$$

3. Procédé de soudage à l'arc submergé selon la revendication 1 ou 2, dans lequel l'apport de chaleur de soudage du côté supérieur de la plaque d'acier est supérieur à l'apport de chaleur de soudage du côté inférieur de la plaque d'acier.

4. Procédé de soudage à l'arc submergé selon l'une quelconque des revendications 1 à 3, dans lequel le soudage du côté inférieur et le soudage du côté supérieur de la plaque d'acier sont chacun réalisés avec 3 électrodes ou plus et en un seul passage.

5. Procédé de soudage à l'arc submergé selon l'une quelconque des revendications 1 à 4, dans lequel t(mm) est dans une plage de 25,4 mm à 38,1 mm et $t^{1,37} \leq Q$.

6. Procédé pour fabriquer un joint de soudure, dans lequel le joint de soudure est formé par le procédé de soudage à l'arc submergé selon l'une quelconque des revendications 1 à 5.

7. Procédé pour fabriquer un tuyau ou tube en acier ayant un joint de soudure, dans lequel le joint de soudure est fabriqué par le procédé selon la revendication 6.

# FIG. 1

EP 2 883 643 B1

# FIG. 2

Top side

Bottom side

# FIG. 3

15

**EP 2 883 643 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010137186 A1
- JP H11138266 A
- JP H10109171 A
- JP 2002146471 A
- JP 2004052104 A
- JP 2009091653 A
- JP 2006272377 A
- JP 2009241128 A
- JP 2010274275 A
- JP 2010274276 A